## Europäisches Patentamt
## European Patent Office
## Office européen des brevets

(19)

(11) Numéro de publication: **0 001 859**
**B1**

(12)

# FASCICULE DE BREVET EUROPEEN

(45) Date de publication du fascicule du brevet: **30.12.81**

(51) Int. Cl.³: **C 08 L 27/06, C 08 K 3/20, C 08 K 5/05**

(21) Numéro de dépôt: **78200268.7**

(22) Date de dépôt: **30.10.78**

(54) **Compositions rigides à base de polymères du chlorure de vinyle stabilisées à la chaleur au moyen d'oxyde de magnésium et d'un polyalcool.**

(30) Priorité: **02.11.77 FR 7733153**

(43) Date de publication de la demande:
**16.05.79 Bulletin 79/10**

(45) Mention de la délivrance du brevet:
**30.12.81 Bulletin 81/52**

(84) Etats Contractants Désignés:
**BE CH DE FR GB LU NL SE**

(56) Documents cités:
**FR - A - 1 211 814**
**FR - A - 2 027 444**
**GB - A - 1 062 311**
**US - A - 3 017 379**

(73) Titulaire: **SOLVAY & Cie (Société Anonyme)**
**Rue du Prince Albert, 33**
**B-1050 Bruxelles (BE)**

(72) Inventeur: **Lheureux, Albert**
**Rue Moorsleede, 79**
**B-1020 Bruxelles (BE)**

(74) Mandataire: **Eischen, Roland**
**Solvay & Cie Département de la Propriété**
**Industrielle Rue de Ransbeek 310**
**B-1120 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# 0 001 859

Compositions rigides à base de polymères du chlorure de vinyle stabilisées à la chaleur au moyen d'oxyde de magnésium et d'un polyalcool

La présente invention concerne des compositions rigides à base de polymères du chlorure de vinyle stabilisées à la chaleur. Elle concerne plus particulièrement des compositions rigides à base de polymères du chlorure de vinyle stabilisées à la chaleur au moyen d'oxyde de magnésium et d'un polyalcool.

Les polymères du chlorure de vinyle sont utilisés à la fabrication d'une multitude d'objets rigides très divers par des procédés de mise en oeuvre qui requièrent l'application de températures élevées. généralement de 180 à 200°C environ, pour amener le polymère à un degré de ramollissement suffisant. A ces températures, les polymères du chlorure de vinyle subissent une dégradation importante qui se traduit par une altération rapide de leur couleur et de leurs propriétés mécaniques. Habituellement on les met donc en oeuvre en présence d'additifs améliorant leur résistance à la dégradation thermique, appelés stabilisants thermiques.

Pour les applications qui ne requièrent pas une transparence très élevée des objets façonnés rigides, telles que la fabrication de tubes et de gaines, on fait généralement appel à des stabilisants thermiques dérivés de métaux lourds tels que des sels ou des esters de plomb, de baryum et/ou de cadmium. De fait, ces composés constituent des stabilisants thermiques très efficaces des polymères du chlorure de vinyle. Cependant, ils présentent l'inconvénient d'être toxiques, de sorte que leur manipulation requiert des précautions particulières. Généralement, on recourt au port de masques et à l'installation de systèmes d'aspiration spéciaux dans les ateliers où on les manipule.

La présente invention, telle qu'elle est caractérisée dans les revendications, a pour but de procurer des compositions rigides à base de polymères du chlorure de vinyle présentant une stabilité satisfaisante à la chaleur, qui soient exemptes de métaux lourds tels que le plomb, le baryum, et le cadmium, et qui ne présentent pas d'autres inconvénients par rapport aux compositions contenant pareils métaux.

Par alcool polyhydrique aliphatique saturé, on entend désigner les composés organiques aliphatiques saturés contenant au moins deux groupements hydroxyles et au plus un nombre de groupements hydroxyles égal au nombre total d'atomes de carbone.

On a constaté que l'utilisation d'oxyde de magnésium ou d'un alcool polyhydrique aliphatique saturé, comme seul additif, n'améliore guère la résistance à la dégradation thermique des polymères du chlorure de vinyle. Par contre, de manière tout à fait surprenante, l'utilisation conjointe d'oxyde de magnésium et d'un alcool polyhydrique tel que défini ci-dessus, conduit à l'obtention de compositions efficacement stabilisées, aptes à être transformées par toutes les techniques usuelles de transformation en des objets façonnés rigides de couleur claire présentant d'excellentes propriétés mécaniques. La stabilisation thermique des polymères du chlorure de vinyle à l'intervention du système stabilisant selon l'invention procède donc d'un effet de synergie.

Tous les alcools polyhydriques, aliphatiques saturés conviennent à la réalisation de compositions conformes à l'invention. De même, ces compositions peuvent contenir plusieurs alcools polyhydriques aliphatiques saturés. Toutefois, dans le cas où le nombre total d'atomes de carbone de ces alcools est fort élevé, un phénomène secondaire de surlubrification peut apparaître. Généralement, on utilise donc des alcools polyhydriques aliphatiques comprenant de 2 à 15 atomes de carbone et, de préférence, de 3 à 8 atomes de carbone. A titre d'exemples de pareils alcools, on peut citer les 1.3 et 1.2-propanediols, le 2.2-diméthyl-1.3-propanediol, le 2.2-diéthyl-1.3-propanediol, le 2-éthyl,2-(hydroxyméthyl)-1.3 propanediol (triméthylolpropane), le 2-méthyl,2-(hydroxyméthyl)-1.3-propanediol (triméthyloléthane), les 1.2- 1.3- et 1.4 butanediols, les 1.2.3- et 1.2.4-butanetriols, les pentanediols, les pentanetriols, le tétrakis(hydroxyméthyl)méthane (pentaérythritol), les hexanediols, les hexanetriols, les hexanetétrols et les hexols tels que le sorbitol et le mannitol.

Parmi tous ces alcools polyhydriques aliphatiques saturés, on donne la préférence à ceux comprenant au moins deux groupements hydroxyles primaires. Les meilleurs résultats sont obtenus avec ceux dont tous les groupements hydroxyles sont primaires, c'est-à-dire ceux contenant exclusivement des groupements hydroxyles primaires.

Des compositions particulièrement préférées selon la présente invention comprennent donc comme stabilisant thermiques de l'oxyde de magnésium et au moins un alcool polyhydrique aliphatique saturé contenant exclusivement des groupements hydroxyles primaires. A titre d'exemples de pareils alcools polyhydriques, on peut citer le 1.3-propanediol, les 2-méthyl- et 2.2-diméthyl-1.3-propanediols, le triméthyloléthane, le triméthylolpropane et le pentaérythritol. Parmi ceux-ci, on donne la préférence au triméthyloléthane, au triméthylolpropane et au pentaérythritol. Des alcools particulièrement préférés sont les triméthylolpropane et le pentaérythritol.

Suivant un mode de réalisation tout particulièrement préféré, on utilise de mélanges de pentaérythritol et de triméthylolpropane. Avantageusement, ceux-ci contiennent une quantité prépondérante de pentaérythritol.

Les quantités d'oxyde de magnésium et d'alcool polyhydrique présentes dans les compositions conformes à l'invention ne sont pas critiques. La présence de quantités aussi faibles que 0.1% en poids pour 100 parties de résine (pcr) de chacun des constituants du système stabilisant thermique suffit déjà pour améliorer la stabilité thermique des polymères du chlorure de vinyle. L'addition de quantités plus

2

**0 001 859**

importantes d'oxyde de magnésium, respectivement d'alcool polyhydrique permet de l'améliorer encore. Toutefois, il est inutile de dépasser une teneur en oxyde de magnésium ou en alcool polyhydrique d'environ 1,5 pcr.

Les compositions stabilisées de l'invention contiennent donc en général de 0,1 à 1,5 pcr d'oxyde de magnésium, ainsi que de 0,1 à 1,5 pcr d'alcool polyhydrique aliphatique.

Des compositions particulièrement préférées contiennent d'environ 0,2 à 0,3 pcr d'oxyde de magnésium ainsi que d'environ 0,5 à 1,2 pcr d'alcool polyhydrique aliphatique.

Les proportions relatives d'oxyde de magnésium et d'alcool polyhydrique ne sont pas critiques non plus. Habituellement, on met ces additifs en oeuvre dans un rapport pondéral oxyde de magnésium/alcool polyhydrique allant de 1:1 à 1:4. Les meilleurs résultats sont obtenus avec des rapports pondéraux allant de 1:2 à 1:3.

Des compositions tout particulièrement préférées de la présente invention contiennent donc pour 100 parties en poids de polymère du chlorure de vinyle,

— environ 0,2 à 0,3 partie d'oxyde de magnésium, et,

— environ 0,5 à 1,2 parties d'un mélange de pentaérythritol et de triméthylolpropane, l'oxyde de magnésium et le mélange d'alcools polyhydriques étant utilisés dans un rapport pondéral allant de 1:2 à 1:3.

Les compositions rigides selon l'invention peuvent contenir en outre d'autres additifs usuels des polymères du chlorure de vinyle tels que par exemple, des agents facilitant la mise en oeuvre, des agents renforçants, des pigments, des lubrifiants ou encore des stabilisants thermiques auxiliaires.

C'est ainsi qu'il s'est avéré particulièrement avantageux d'utiliser des systèmes stabilisants dits "calcium-zinc", connus en eux-mêmes, en association avec les stabilisants thermiques spécifiques de l'invention. A titre d'exemples de systèmes calcium-zinc, on peut citer ceux à base de savons de calcium et de zinc. De préférence, on utilise des sels de zinc et de calcium d'acides aliphatiques monocarboxyliques saturés ayant de 6 à 30 atomes de carbone tels que par exemple les acides stéarique, palmitique, 2-éthylhexanoïque etc. Les meilleurs résultats sont obtenus avec les stéarates de calcium et de zinc.

Des compositions tout particulièrement préférées selon l'invention comprennent donc un système stabilisant thermique principal, composé essentiellement d'oxyde de magnésium et d'un alcool polyhydrique aliphatique saturé, et un stabilisant thermique auxiliaire constitué d'un mélange de stéarates de calcium et de zinc.

La proportion pondérale du stéarate de calcium au stéarate de zinc, de même que les quantités de stéarates de zinc et de calcium ne sont pas critiques.

La quantité globale de stéarates de calcium et de zinc est généralement comprise entre 1 et 2% en poids, avantageusement entre 1,1 et 1,5% en poids, par rapport au polymère du chlorure de vinyle. La proportion pondérale du stéarate de calcium au stéarate de zinc varie généralement de 1:0,1 à 1:0,5.

Par polymères du chlorure de vinyle, on entend désigner tous les polymères contenant au moins 50% molaires, et de préférence au moins 70% molaires, d'unités monomériques dérivées du chlorure de vinyle. Les polymères du chlorure de vinyle qui conviennent à la réalisation des compositions selon l'invention comprennent donc aussi bien les homopolymères du chlorure de vinyle que ses copolymères contenant des unités monomériques dérivées d'un ou de plusieurs comonomères.

A titre d'exemples de comonomères du chlorure de vinyle, on peut citer les oléfines telles que l'éthylène, le propylène et le styrène, les esters tels que l'acétate de vinyle et les acrylates et les méthacrylates d'alkyles, les dérivés vinylidéniques tels que le chlorure et le fluorure de vinylidène.

Le mode de fabrication des polymères du chlorure de vinyle peut être quelconque. On peut donc utiliser indifféremment pour la fabrication de compositions selon l'invention des polymères du chlorure de vinyle obtenus par polymérisation en masse, en phase gazeuse, en solution ou encore en émulsion, en microsuspension ou en suspension aqueuses. Cependant, on utilise de préférence des polymères obtenus par polymérisation en suspension aqueuse.

L'incorporation du système stabilisant thermique principal et, le cas échéant, du stabilisant thermique auxiliaire dans le polymère du chlorure de vinyle ne pose aucun problème particulier. Les stabilisants sont habituellement mélangés avec le polymère de manière connue en soi, par exemple, au moment de la fabrication du prémélange ou encore en fin de polymérisation, soit par introduction directe dans le milieu de polymérisation lorsque le taux de conversion souhaité est pratiquement atteint, soit par addition au gâteau humide de polymère obtenu par essorage ou filtration de la dispersion aqueuse venant de polymérisation.

Dans les deux derniers cas, il est recommandé d'utiliser le ou les stabilisants thermiques sous la forme d'une dispersion aqueuse afin de favoriser leur incorporation homogène au polymère du chlorure de vinyle.

Les compositions rigides stabilisées à la chaleur conformes à l'invention sont aptes à la mise en oeuvre par tous les procédés classiques de transformation des matières plastiques. Ces compositions conviennent pour la fabrication d'objets façonnés rigides, et tout particulièrement pour la fabrication par extrusion de tubes, de tuyaux et de profilés rigides.

Les exemples qui suivent illustrent l'invention sans toutefois la limiter.

3

## 0 001 859

Exemples 1 à 8

Dans tous les exemples, on a utilisé comme polymère du chlorure de vinyle, un polychlorure de vinyle de nombre K = 65 (mesuré dans la cyclohexanone à 25°C) obtenu par homopolymérisation en suspension aqueuse du chlorure de vinyle.

Dans tous les cas, l'alcool polyhydrique aliphatique saturé utilisé était constitué par un mélange de pentaérythritol et de triméthylolpropane contenant environ 60% en poids de pentaérythritol, ci-apres brièvement dénommé "Polyol".

Dans les exemples 1 à 6 et 8, on a évalué des compositions répondant à la formulation A; dans l'exemple 7, on a évalué une composition répondant à la formule B, les teneurs étant exprimées en parties en poids:

|  | Formulation A | Formulation B |
|---|---|---|
| Polychlorure de vinyle | 100 | 100 |
| Paraffine solide | 0,30 | 0,30 |
| Cire minérale | 0,30 | 0,80 |
| Stéarine | — | 0,15 |
| Stabilisants thermiques : Oxyde de magnésium | | |
| Polyol | | voir Tableau I |
| Stéarates de calcium et de zinc | | |

Les exemples 1 et 2, selon l'invention, illustrent des compositions contenant des quantités variables d'oxyde de magnésium et de "Polyol".

Les exemples 3R, 4R et 5R, de référence, illustrent des compositions contenant soit de l'oxyde de magnésium (exemples 3R et 4R), soit du "Polyol" (exemple 5R).

Les exemples 6, 7 et 8, également selon l'invention, illustrent des compositions contenant des quantités variables d'oxyde de magnésium et de "Polyol", ainsi que de stéarates de calcium et de magnésium.

Les compositions suivant les exemples 1 à 7 ont été préparées suivant la technique du prémélange. Plus précisément, on a mélangé tous les ingrédients de la composition (y compris le polychlorure de vinyle) pendant 10 minutes dans un mélangeur lent et non chauffé.

La composition suivant l'exemple 8 a été préparée par pulvérisation — sur le gâteau obtenu par essorage de la suspension aqueuse venant de polymérisation — d'une dispersion aqueuse de tous les additifs. Le gâteau imprégné a ensuite été séché dans les conditions usuelles, à savoir pendant 2 heures 30 minutes à 65°C.

La coloration initiale (ou stabilité thermique à court terme) des compositions est évaluée sur des crêpes d'une épaisseur d'1,5 mm obtenus par malaxage (malaxeur à deux cylindres) à 200°C. Le temps qui a été nécessaire dans chaque cas pour former complètement le crêpe est consigné au Tableau I en annexe. A ce moment précis, considéré comme étant le temps $t_o$, on évalue le coloris du crêpe.

La stabilité thermique à long terme, également évaluée sur malaxeur à 200°C est déterminée par la mesure du temps, compté à partir de $t_o$, qui s'écoule avant que la crêpe (maintenu à 200°C) ne noircisse.

Dans le Tableau I en annexe sont consignés les résultats de l'évaluation.

La comparaison des résultats des exemples 1 et 2, avec ceux des exemples 3R, 4R et 5R montre à suffisance l'effet stabilisant synergique résultant de l'emploi combiné d'oxyde de magnésium et d'un polyol aliphatique saturé.

La comparaison des résultats des exemples 6, 7 et 8 avec ceux des exemples 1 et 2 montre l'amélioration supplémentaire apportée par le couple de stéarates de calcium et de zinc.

TABLEAU I

| N° de l'exemple | Stabilisants thermiques | | | | Evaluation des compositions | | |
|---|---|---|---|---|---|---|---|
| | Oxyde de magnésium | "Polyol" | Stéarate de zinc | Stéarate de calcium | Temps nécessaire pour former le crêpe, min. | Coloris initial | Stabilité thermique à long terme (sur malaxeur à 200°C), min. |
| 1 | 0,25 | 1 | — | — | 1,50 | beige-orange | 10 |
| 2 | 1,00 | 1 | — | — | 2,00 | jaune terne | 11 |
| 3R | 0,25 | — | — | — | 1,50 | brun foncé | 3,5 |
| 4R | 1,00 | — | — | — | 4,50 | vert-brun | 1,0 |
| 5R | — | 1 | — | — | 2,00 | brun | 1,0 |
| 6 | 0,25 | 1 | 0,25 | 1 | 1,50 | beige clair | 16 |
| 7 | 0,25 | 0,6 | 0,10 | 1 | 1,50 | beige clair | 18 |
| 8 | 0,25 | 1 | 0,25 | 1 | 1,50 | blanc | 16 |

## Revendications

1. Compositions rigides à base de polymères du chlorure de vinyle stabilisées à la chaleur, caractérisées en ce qu'elles comprennent comme stabilisants thermiques de l'oxyde de magnésium et un alcool polyhydrique aliphatique saturé.

2. Compositions suivant la revendication 1, caractérisées en ce que l'alcool polyhydrique aliphatique saturé comprend de 2 à 15 atomes de carbone.

3. Compositions suivant la revendication 1, caractérisées en ce que l'alcool polyhydrique aliphatique saturé comprend au moins deux groupements hydroxyles primaires.

4. Compositions suivant la revendication 3, caractérisées en ce que l'alcool polyhydrique aliphatique saturé comprend exclusivement des groupements hydroxyles primaires.

5. Compositions suivant la revendication 4, caractérisées en ce que l'alcool polyhydrique aliphatique saturé est choisi parmi le triméthyloléthane, le triméthylolpropane, le pentaérythritol et leurs mélanges.

6. Compositions suivant la revendication 5, caractérisées en ce que l'alcool polyhydrique aliphatique saturé est choisi parmi les mélanges des pentaérythritol et de triméthylolpropane contenant une quantité prépondérante de pentaérythritol.

7. Compositions suivant l'une quelconque des revendications 1 à 6, caractérisées en ce qu'elles contiennent, pour 100 parties en poids de polymère du chlorure de vinyle,
— de 0,1 à 1,5 partie d'oxyde de magnésium, et
— de 0,1 à 1,5 partie d'alcool polyhydrique aliphatique saturé.

8. Compositions suivant l'une quelconque des revendications 1 à 7, caractérisées en ce que l'oxyde de magnésium et l'alcool polyhydrique aliphatique saturé sont utilisés dans un rapport pondéral allant de 1:1 à 1:4.

9. Compositions suivant l'une quelconque des revendications 1 à 8, caractérisées en ce qu'elles contiennent également un mélange de stéarates de calcium et de zinc.

## Claims

1. Heat-stabilised rigid compositions based on vinyl chloride polymers, characterised in that they contain magnesium oxide and a saturated aliphatic polyhydric alcohol as heat stabilisers.

2. Compositions according to Claim 1, characterised in that the saturated aliphatic polyhydric alcohol contains from 2 to 15 carbon atoms.

3. Compositions according to Claim 1, characterised in that the saturated aliphatic polyhydric alcohol contains at least two primary hydroxyl groups.

4. Compositions according to Claim 3, characterised in that the saturated aliphatic polyhydric alcohol contains exclusively primary hydroxyl groups.

5. Compositions according to Claim 4, characterised in that the saturated aliphatic polyhydric alcohol is chosen from amongst trimethylolethane, trimethylolpropane, pentaerythritol and mixtures thereof.

6. Compositions according to Claim 5, characterised in that the saturated aliphatic polyhydric alcohol is chosen from amongst mixtures of pentaerythritol and trimethylolpropane containing a preponderant amount of pentaerythritol.

7. Compositions according to any one of Claims 1 to 6, characterised in that they contain, per 100 parts by weight of vinyl chloride polymer, from 0.1 to 1.5 parts of magnesium oxide and from 0.1 to 1.5 parts of saturated aliphatic polyhydric alcohol.

8. Compositions according to any one of Claims 1 to 7, characterised in that the magnesium oxide and the saturated aliphatic polyhydric alcohol are used in a weight ratio ranging from 1:1 to 1:4.

9. Compositions according to any one of Claims 1 to 8, characterised in that they also contain a mixture of calcium stearate and zinc stearate.

## Patentansprüche

1. Starre, wärmestabilisierte Zusammensetzungen auf der Basis von Vinylchloridpolymeren, dadurch gekennzeichnet, daß sie als Wärmestabilisatoren Magnesiumoxid und einen gesättigten mehrwertigen aliphatischen Alkohol enthalten.

2. Zusammensetzungen gemäß Anspruch 1, dadurch gekennzeichnet, daß der gesättigte mehrwertige aliphatische Alkohol 2 bis 15 Kohlenstoffatome enthält.

3. Zusammensetzungen gemäß Anspruch 1 dadurch gekennzeichnet, daß der gesättigte mehrwertige aliphatische Alkohol mindestens 2 primäre Hydroxylgruppen enthält.

4. Zusammensetzungen gemäß Anspruch 3, dadurch gekennzeichnet, daß der gesättigte mehrwertige aliphatische Alkohol ausschließlich primäre Hydroxylgruppen enthält.

5. Zusammensetzungen gemäß Anspruch 4, dadurch gekennzeichnet, daß der gesättigte mehrwertige aliphatische Alkohol ausgewählt ist unter Trimethyloläthan, Trimethylolpropan, Pentaerythrit und deren Mischungen.

6. Zusammensetzungen gemäß Anspruch 5, dadurch gekennzeichnet, daß der gesättigte mehrwertige aliphatische Alkohol ausgewählt ist unter den Mischungen von Pentaerythrit und Trimethylolpropan mit einer überwiegenden Menge an Pentaerythrit.

7. Zusammensetzungen gemäß einem der Ansprüche 1 bis 6 dadurch gekennzeichnet, daß sie auf hundert Gewichtsteile Vinylchloridpolymer enthalten:

0,1 bis 1,5 Teile Magnesiumoxid und

0,1 bis 1,5 Teile gesättigten, mehrwertigen aliphatischen Alkohol.

8. Zusammensetzungen gemäß einem der Ansprüche 1 bis 7, dadurch gekennzeichnet, daß das Magnesiumoxid und der gesättigte, mehrwertige aliphatische Alkohol in einem Gewichtsverhältnis von 1:1 bis 1:4 angewandt werden.

9. Zusammensetzungen gemäß einem der Ansprüche 1 bis 8, dadurch gekennzeichnet, daß sie außerdem eine Mischung von Kalzium- und Zinkstearaten enthalten.